# EUROPÄISCHE PATENTSCHRIFT

(11) **EP 3 280 829 B1**
(45) Veröffentlichungstag und Bekanntmachung des Hinweises auf die Patenterteilung: **26.02.2020**
(21) Anmeldenummer: 16721383.4
(22) Anmeldetag: 27.04.2016
(51) Int. Cl.: C22C 27/04, C22C 45/00, C22C 47/14

(54) **MOLYBDÄN-SILIZIUM-BORLEGIERUNG UND VERFAHREN ZUR HERSTELLUNG SOWIE BAUTEIL**
MOLYBDENUM-SILICON-BORON ALLOY AND METHOD FOR PRODUCING SAME, AND COMPONENT
ALLIAGE MOLYBDÈNE-SILICIUM-BORE, PROCÉDÉ DE FABRICATION ET PIÈCES CORRESPONDANTES

(30) Priorität: 26.05.2015 DE 102015209583
(43) Veröffentlichungstag der Anmeldung: 14.02.2018
(73) Patentinhaber: Siemens Aktiengesellschaft, 80333 München (DE)
(72) Erfinder: OTT, Michael, 45470 Mülheim an der Ruhr (DE); PIEGERT, Sebastian, 03222 Lübbenau (DE)
(86) Internationale Anmeldenummer: PCT/EP2016/059342
(87) Internationale Veröffentlichungsnummer: WO 2016/188696

(56) Entgegenhaltungen:
- WANG ET AL: "Microstructure and oxidation resistance of laser-remelted Mo-Si-B alloy", SCRIPTA MATERIALIA, ELSEVIER, AMSTERDAM, NL, Bd. 56, Nr. 9, 26. Februar 2007 (2007-02-26), Seiten 737-740, XP005905543, ISSN: 1359-6462, DOI: 10.1016/J.SCRIPTAMAT.2007.01.025
- KRÃ 1/4 GER M ET AL: "Influence of processing on the microstructure and mechanical behaviour of Mo-Si-B alloys", JOURNAL OF PHYSICS: CONFERENCE SERIES, INSTITUTE OF PHYSICS PUBLISHING, BRISTOL, GB, Bd. 240, Nr. 1, 9. August 2010 (2010-08-09), Seite 12087, XP020195090, ISSN: 1742-6596, DOI: 10.1088/1742-6596/240/1/012087
- GORR B ET AL: "High-temperature oxidation behavior of Mo-Si-B-based and Co-Re", INTERMETALLICS, ELSEVIER SCIENCE PUBLISHERS B.V, GB, Bd. 48, 31. Oktober 2013 (2013-10-31), Seiten 34-43, XP028668032, ISSN: 0966-9795, DOI: 10.1016/J.INTERMET.2013.10.008
- PASWAN S ET AL: "Isothermal oxidation behaviour of Mo-Si-B and Mo-Si-B-Al alloys in the temperature range of 400-800<o>C", MATERIALS SCIENCE AND ENGINEERING A: STRUCTURAL MATERIALS: PROPERTIES, MICROSTRUCTURES AND PROCESSING, ELSEVIER BV, NL, Bd. 424, Nr. 1-2, 25. Mai 2006 (2006-05-25), Seiten 251-265, XP027952589, ISSN: 0921-5093 [gefunden am 2006-05-25]
- HASEMANN G ET AL: "Microstructure and creep properties of a near-eutectic directionally solidified multiphase Mo-Si", INTERMETALLICS, ELSEVIER SCIENCE PUBLISHERS B.V, GB, Bd. 48, 9. Dezember 2013 (2013-12-09), Seiten 28-33, XP028668038, ISSN: 0966-9795, DOI: 10.1016/J.INTERMET.2013.11.022

## Beschreibung

Die Erfindung betrifft eine spezielle Molybdän-Silizium-Bor-legierung, ein Herstellungsverfahren und ein Bauteil.

Mo-(x)Si-(y)B-Legierungen gelten als eine potentielle Möglichkeit, über das Anwendungsfenster von klassischen NickelBasis Superlegierungen hinaus, Heißgasbauteile für die Gasturbine zu fertigen. Diese Legierungen bieten ein Einsatzfenster von bis hin zu 1973K, mit Beschichtung bis zu 2073K Heißgastemperatur. Damit ist eine Erweiterung des Einsatzspektrums um bis zu 300K, mit entsprechender Erhöhung der Effizient verbunden, gegenüber bislang eingesetzten Legierungen möglich. Eine Studie in der Wirkung von Zr auf Mo-Si-B Legierungen wird in der "Influence of processing on the microstructure and mechanical behaviour of Mo-Si-B alloys", Krüger, M. et al., 15th International Conference on the Strength of Materials, Journal of Physics,: Conference Series 240(2010) 012087, offenbart. Darin wird auch eine Legierung bestehend aus Mo-13Si-12B offenbart.

Die Verarbeitung dieser Legierungen kann einerseits auf einer pulvermetallurgischen Route erfolgen, andererseits mit Hilfe von Zonenschmelzen. Gerade das Zonenschmelzen führt wegen des entstehenden Temperaturgradienten zu der Ausbildung einer Faser-Matrix-Struktur, die durch ihre hervorragenden Kriecheigenschaften bei Temperaturen über 1273K besticht.

Beide Verfahren lassen jedoch nur die Bildung von einfachen Probekörpern zu, so dass das Potential dieser Legierungen derzeit nicht ausgeschöpft werden kann.

Es ist daher Aufgabe der Erfindung o. g. Problem zu lösen.

Die Aufgabe wird gelöst durch eine Legierung gemäß Anspruch 1, ein Verfahren gemäß Anspruch 2 und ein Bauteil gemäß Anspruch 4.

Es wird vorgeschlagen eine neue Mo-Si-B-Legierung mittels einem Additiven Fertigungsverfahren (AM) wie Selective Laser Melting (SLM) zu verarbeiten. Weiterhin erlaubt die Verarbeitung mit einem Energiestrahl, wie einem Laserstrahl, in Verbindung mit den Wärmeableitungsbedingungen im Pulverbett, die Ausbildung eines Wärmeleitungsgradienten, der wiederrum vorteilhaft für die optionale angestrebte Bildung einer Faser-Matrix Struktur ist, in dem die einzelnen Phasen als Moₛₛ/Mo₅SiB₂/Mo₃Si Struktur vorliegen.

Eine Zulegierung von Zirkon (Zr) (0,5at% - 2at%) führt dabei zu einer vorteilhaften Erhöhung der Bruchzähigkeit der Legierung bzw. des Bauteils.

Weiterhin bietet der AM Prozess im Vergleich zum pulvermetallurgischen Prozess den Vorteil, dass Sauerstoff weitestgehend vom Werkstück ferngehalten wird. Dies wirkt sich positiv auf die Materialeigenschaften aus.

Die Prozessdaten für den Herstellprozess mittels AM Prozess sind vorteilhafterweise:
Legierung: Mo-(x)Si-(y)B,
wobei x = 13-18at% und y= 8-12at%,
Zugabe von Zirkon (Zr) z= 0,5at% - 2at%, bevorzugt z= 1at%,
Korngröße: 10-60µm, entweder gasverdüst oder gemahlen, als mögliches Prozessfenster:
   Scangeschwindigkeit: 400mm/s - 2000mm/s,
   bevorzugt 1000mm/s - 1500mm/s,
   Laserleistung: 80W - 250W,
   bevorzugt 100-170W.

## Patentansprüche

1. Molybdän-Silizium-Bor-Legierung
bestehend aus der Zusammensetzung Mo-(x)Si-(y)B-(z)Zr, wobei
x = 13at% bis 18at%,
y = 8at% bis 12at% sowie
z = 0,5at% bis 2at% Zirkon (Zr).

2. Verfahren zur Herstellung eines Bauteils aus Molybdän-Silizium-Borid aus einer Legierung gemäß Anspruch 1, bei dem ein additives Herstellungsverfahren verwendet wird, bei dem Pulver lagenweise aufgetragen wird und
selektiv durch einen Energiestrahl,
insbesondere einem Laserstrahl,
verdichtet wird.

3. Verfahren nach Anspruch 2,
bei dem das verwendete Pulver größtenteils,
insbesondere zumindest zu 80% Korngrößen von 10µm bis 60µm aufweist und wobei das Pulver gasverdüst oder gemahlen ist und
bei dem eine Scangeschwindigkeit zwischen Substrat und Energiestrahl von 400mm/s bis 2000mm/s,
insbesondere 1000mm/s bis 1500mm/s verwendet wird und/oder
eine Leistung des Energiestrahls,
insbesondere des Laserstrahls,
von 80W bis 250W,
insbesondere 100W bis 170W
verwendet wird.

4. Bauteil aus einer Legierung nach Anspruch 1,
und/oder hergestellt durch ein Verfahren gemäß Anspruch 2 oder 3, das eine Faser-Matrix-Struktur, mit den Phasen Moₛₛ/Mo₅SiB_{2/}Mo₃Si aufweist.

## Claims

1. Molybdenum-silicon-boron alloy
consisting of the composition Mo-(x)Si-(y)B-(z)Zr,
where
x = 13at% to 18at%,
y = 8at% to 12at%, and
z = 0.5at% to 2at% of zirconium (Zr).

2. Process for producing a component composed of molybdenum-silicon boride composed of an alloy according to Claim 1, wherein an additive manufacturing process in which powder is applied in layers and is selectively densified by means of an energy beam, in particular a laser beam, is used.

3. Process according to Claim 2,
wherein the powder used mostly, in particular to an extent of at least 80%, has particle sizes in the range from 10µm to 60µm and the powder has been gas-atomized or milled
and
wherein a scanning speed between substrate and energy beam of from 400mm/s to 2000mm/s,
in particular from 1000mm/s to 1500mm/s, is used
and/or
a power of the energy beam,
in particular of the laser beam,
of from 80W to 250W,
in particular from 100W to 170W,
is used.

4. Component composed of an alloy according to Claim 1, and/or produced by a process according to Claim 2 or 3, which has a fiber-matrix structure,
comprising the phases Moₛₛ/Mo₅SiB₂/Mo₃Si.

## Revendications

1. Alliage molybdène-silicium-bore
constitué de la composition Mo-(x)Si-(y)B-(z)Zr,
dans laquelle
x = 13% en atome à 18% en atome,
y = 8% en atome à 12% en atome, ainsi que
z = 0,5% en atome à 2% en atome de zirconium (Zr).

2. Procédé de production d'une pièce en borure de molybdène-silicium en un alliage suivant la revendication 1,
dans lequel on utilise un procédé de production additif,
dans lequel on dépose de la poudre couche par couche et
on comprime sélectivement par un faisceau d'énergie, notamment par un faisceau laser.

3. Procédé suivant la revendication 2,
dans lequel la poudre utilisée pour la plus grande partie, notamment pour au moins 80%, a une granulométrie de 10 µm à 60 µm et dans lequel la poudre est pulvérisée par voie gazeuse ou broyée
et
dans lequel on utilise une vitesse de balayage entre le substrat et un faisceau d'énergie de 400 mm/s à 2 000 mm/s, notamment de 1 000 mm/s à 1 500 mm/s
et/ou
on utilise une puissance du faisceau d'énergie,
notamment du faisceau laser,
de 80 W à 250 W,
notamment de 100 W à 170 W.

4. Pièce en un alliage suivant la revendication 1,
et/ou produite par un procédé suivant la revendication 2 ou 3, qui a une structure fibre-matrice ayant les phases Moss/Mo5SiB2/Mo3Si.
